# EUROPEAN PATENT SPECIFICATION

(11) **EP 3 219 626 B1**
(45) Date of publication and mention of the grant of the patent: **15.05.2019**
(21) Application number: 16161147.0
(22) Date of filing: 18.03.2016
(51) Int. Cl.: B65B 9/00, B65B 31/00, B65B 51/02, B65B 51/10, B65B 61/28, B65B 57/18, B65B 57/10, B65B 59/00, G01M 3/20, G01M 3/22, G01M 3/32, B25J 11/00, B25J 9/00, B65B 25/00

(54) **METHOD AND APPARATUS FOR LEAK DETECTION FOR PACKAGES**
VERFAHREN UND VORRICHTUNG ZUR ERKENNUNG VON LECKAGEN FÜR PACKUNGEN
PROCÉDÉ ET APPAREIL DE DÉTECTION DE FUITE POUR PAQUETS

(43) Date of publication of application: 20.09.2017
(73) Proprietor: Air Liquide Deutschland GmbH, 40235 Düsseldorf (DE); L'AIR LIQUIDE, Société Anonyme pour l'Etude et l'Exploitation des Procédés Georges Claude, 75007 Paris (FR)
(72) Inventor: Rinklake, Ansgar, 49196 Bad Laer (DE)
(74) Representative: KNH Patentanwälte Neumann Heine Taruttis PartG mbB

(56) References cited:
- WO-A1-97/39322
- WO-A1-99/10721
- DE-A1- 4 140 725

## Description

The present invention is directed to leak detection for packages, in particular for packages for food products like e. g. welded bags filled with food products.

It is known that products, in particular food products, are sold to customers in packages. In particular, it is known to package food products in tubular bags, bowls with a foil cover or similar packages made of plastic. Due to increased demands regarding the shelf life of food products, the packages are commonly filled with a protective inert gas instead of air. This can prevent food products from perishing. In particular, respective chemical reactions can be inhibited, mostly due to lack of oxygen. This, however, requires that the packages are gastight, so that oxygen is eliminated from the atmosphere in the packages at least sufficiently long compared with the shelf life of the food products. Hence, leaks in the packages have to be detected before the packages are sold to costumers. A leaky package may result in perished food products. The most commonly applied method for leak detection in this context is exerting a manual pressure onto a package, which is placed under water. Any leak in this package can be identified by gas bubbles.

A further known approach for leak detection comprises a tracer gas (e.g. helium, carbon dioxide or hydrogen), which is added to the protective gas within the package as is known, e.g. from WO97/39322 A1. The tracer gas, in contrast to the protective gas, can be detected easily by a respective detector. A potential gas flow through leaks is increased by exerting a manual pressure onto a package or by reducing the pressure in the environment of the package. Both can be done in an enclosed surrounding like a chamber, in which the concentration of the tracer gas is monitored. An increasing tracer gas concentration coinciding with exerting a pressure onto a package is an indication for a leak in this package. However, after each examination of a package, in particular after each detection of a leak, dissipation of the tracer gas from the chamber has to be awaited prior to the subsequent test. This applies particularly to helium and hydrogen as tracer gases because these are easily detectable, even in low concentrations. Carbon dioxide requires a shorter waiting time, but, due to the larger molecule size, smallest leaks cannot be detected reliably using carbon dioxide.

Prior approaches have the disadvantage of being time consuming. Often, only a small number of sample packages can be investigated. Surveying the entire production requires a more efficient leak detection. Further, it can only be detected that there is a leak in a package, whereas leaks cannot be located. The location, however, could be useful information, e. g., for fixing defects in the packaging process.

It is, therefore, an object of the present invention to overcome at least in part the disadvantages known from prior art, and, in particular, to provide a method and a production line for leak detection for packages with an increased efficiency.

These objects are solved by the features of the independent claims. Dependent claims are directed to preferred embodiments of the present invention.

The method according to the present invention is directed to detecting leaks in packages processed in a production line comprising at least one leak detector having a robot arm with at least one gas detector, wherein the robot arm further comprises a marker for marking a location of a leak on a leaky package, and the marker is installed to be operated according to the above described method for marking the location of a leak on a leaky package. The marker is preferably arranged at the utmost tip of the robot arm, so that it can be moved flexibly within a large space.

. The method comprises at least the following steps:
a) moving the gas detector along a detection path covering at least a part of at least one of the packages gathering data, and
b) deciding if a package is deemed to be leaky based on the data gathered by the gas detector.

The packages are preferably tubular bags, other bags, wrappings, bowls with a foil cover or boxes, in which food products may be stored and/or sold to customers. The packages are preferably made at least partly with a synthetic material such as plastic, polyethylene, polyethyleneterephthalate (PET) and/or polypropylene (PP). Preferably, the packages are made at least partly from a metal, in particular Aluminium. Preferably, the packages are made from composite materials comprising e. g. fibrous materials, paper, cardboard or the like being at least coated with a metal and/or plastic such as polyethylene, polyethyleneterephthalate (PET) and/or polypropylene (PP). The materials preferably fulfill hygiene requirements that are relevant when using the packages for food products. After being filled with the food products, the packages are preferably sealed by welding or gluing. Preferably, the packages are gastight after sealing. Further, it is preferred that a multitude of equal packages are processed together. This can facilitate the production process, in particular if the process is at least partly automatized.

The production line preferably comprises all apparatuses necessary to fill the products into the packages, seal the packages and further process the packages, for example by storing the packages in boxes for transporting. Preferably, the production line is operated at least partly automatically. That is, the production line may be controlled by a computer program product. The production line preferably comprises one or more robots and/or other automatically operable apparatuses. An automatized production may lower costs and increase the output quality.

The at least one leak detector is installed for detecting leaks in the packages. This means, in particular, that packages with a leak may be identified. As contact with air, and particularly with oxygen, can cause food products to perish, a leak in a package can reduce the quality of the respective food product.

With the robot arm the leak detector can be operated at least partly automatically. As described above, this can facilitate the production process, in particular the leak detection process to lower costs. Further, this way, the output of the production line, i.e. the number of packages produced and/or examined for leaks per given time interval, may be increased. It is preferred that the robot arm is controlled by a computer program product. Preferably, the detection path, along which the robot arm moves the gas detector, is predeterminedly implemented in the computer program product. The robot arm preferably comprises one or more rods which are connected to each other by junctions. This way, preferably, the robot arm can be used for moving the gas detector flexibly within a large space and along complex detection paths. Further, it is preferred that the gas detector is attached to the utmost tip of the robot arm.

The gas detector is preferably installed for detecting a gas that may penetrate through a leak in a package. Thereby, leaky packages can be identified. Preferably, the gas detector comprises a mass spectrometer, in which the constituents of detected gases can be identified. With such a mass spectrometer different detected gases can be distinguished.

Preferably, the method is performed for one package at a time. Alternatively, it is preferred that a multitude of packages are examined simultaneously. Preferably, the detection path is predetermined depending on the number of packages intended to be examined at the same time. Further, the detection path is preferably adapted to the material, shape and/or size of the packages. Preferably, the detection path can be predetermined taking into consideration positions on the package with an increased probability for leaks. Preferably, the detection path is continuously adapted based on the data generated during the leak detection, e. g. considering the probability or absolute number of leaks in a predeterminable number of leak detection processes at a specific position of the package.

The data in step a) comprises at preferably concentration values for of all detected gases. According to a further preferred embodiment the data comprises position and/or movement data of the robot arm to allow in particular to correlate the concentration values with the position of the gas detector, in particular relative to the packages being controlled. If one of the detected concentrations is higher than a respectively preset threshold value, the examined package is deemed to be leaky in step b). The threshold values for the different gases are preferably preset depending on their concentration within the atmosphere inside the packages compared with their concentration in the environment of the packages, in particular in air.

In a preferred embodiment of the method the packages are filled at least in part with a tracer gas detectable by the gas detector.

The tracer gas preferably is a gas that can be detected easily by the gas detector. In particular, helium, carbon dioxide or hydrogen are preferred. Further, it is preferred that the tracer gas complies with hygiene requirements relevant in the context of food products. That is, in particular, the tracer gas is preferably an inert gas and particularly does not comprise oxygen. It is further preferred that the tracer gas has a concentration in the range of 0.5 Vol.-% to 20 Vol.-% [volume percent], in particular in the range of 3 Vol.-% to 10 Vol.-%. The remainder of the package volume is preferably filled with an(other) inert gas, preferably nitrogen.

In a further preferred embodiment of the method, step a) further comprises moving the gas detector along at least a part of at least one sealing patch of at least one of the packages.

The sealing patches are areas, where the package was sealed and may be, in particular, welding seams or splices. As the likelihood for leaks is increased at the sealing patches, the detection path preferably is arranged such that the gas detector is moved along the sealing patches. It is preferred that all sealing patches of a package are covered completely by the detection path.

According to the invention, the method comprises marking a location of a leak on a leaky package.

It is not only advantageous to identify leaky packages, but also the location of a leak on the package can be relevant. Knowing the location of a leak can be useful information for remedying a possible defect in the equipment used in the production process. Marking the location is preferably performed with a paint, an ink or a dye that is adapted to the surface properties of the package.

In a further preferred embodiment, the method further comprises the following step:
c) ejecting packages deemed to be leaky from the production line.

Once a package is deemed to be leaky in step b), this package is preferably excluded from further processing. This is preferably achieved by an ejector, which, for example, displaces a leaky package on or from a conveyer. The leaky package may then be conveyed to a separate area or collection means for leaky packages, such as a waste container. Preferably, the ejector is operated by a computer program product, which has access to the information gained in step a). Alternatively, it is preferred that a leaky package is removed manually from the production line, e.g. by an operator.

In a further preferred embodiment of the method, in step b) a signal is emitted when a package is deemed to be leaky.

Alternatively to the ejection of the packages it can be advantageous to inform an operator of the production line about a leak or a package deemed to be leaky . The signal preferably is an optical and/or an acoustical signal. It is preferably triggered by a computer program product. It is further preferred that a computer program products records and stores data about the detected gas concentrations and particularly about detected leaks and about the position of the leaks relative to the package. Evaluating this data may be useful for identifying defects in the production line.

In a further preferred embodiment of the method the packages are conveyed continuously through the production line.

In this embodiment the packages are moved or conveyed at a constant speed during leak detection. Thereby, it is preferred that the robot arm basically adapts the speed of the conveyer the products are conveyed by, and further performs the motion necessary for gas detection relative to the motion of the packages. This embodiment of the method is advantageous because the production line as a whole may be operated independently of the leak detector. This means, particularly, that the production line does not have to be interrupted for every examination of a package.

In a further preferred embodiment of the method the packages are conveyed discontinuously through the production line.

In this embodiment, it is preferred that the packages do not move during leak detection. Preferably the duration of leak detection is adapted to a clock frequency, at which the production line as a whole is operated. Therein, the clock frequency denotes the frequency of the discontinuous conveying of the packages. The clock frequency itself can be correlated to the production frequency of the packages.

In a further preferred embodiment of the method a multitude of leak detectors is used to perform steps a) and b) for a multitude of packages simultaneously.

In this embodiment the throughput of the production line can be increased by multiplying the number of packages examinable in each examination cycle. This can increase the efficiency and lower costs. The multitude of leak detectors can either be installed on different robot arms or on the same robot art.

In a further preferred embodiment of the method a multitude of gas detectors at the same robot arm is used to perform steps a) and b) for a multitude of packages simultaneously.

Preferably, the robot arm is installed for moving the multitude of gas detectors in a parallel way. Thereby, a multitude of packages can be examined at the same time. Alternatively, a multitude of leak detectors can be used to examine a single package in a faster way. Preferably, two gas detectors are used at the same robot arm. In that case, e.g., two sealing patches of the same package can be examined simultaneously by the same robot arm. Further, it is preferred that in a multitude of robot arms each robot arm has a multitude of gas detectors each.

In a further preferred embodiment of the method a pressure is exerted onto the at least one of the packages (4) in step a).

Increasing the pressure of the gas in the examined package can increase the rate at which gas penetrates a potential leak. This can facilitate leak detection. The pressure is preferably exerted manually by an operator. Alternatively, it is preferred that an apparatus such as a robot automatically presses a plate or a stamp onto the package, which is hold by a respective counterpart, e. g. by a stationary plate.

According to a further aspect of the invention, a production line is provided comprising at least:
- a conveyor with an ejector, and
- at least one leak detector for leak detection in packages, wherein the leak detector comprises a robot arm with at least one gas detector, and wherein the robot arm is arranged for moving the gas detector along a detection path, wherein the robot arm further comprises a marker for marking a location of a leak on a leaky package, and the marker is installed to be operated according to the above described method for marking the location of a leak on a leaky package. The marker is preferably arranged at the utmost tip of the robot arm, so that it can be moved flexibly within a large space.

The production line is installed to be operated according to the above described method according to the present invention. The details and advantages disclosed for the method of the invention can be applied to the production line according to the invention and vice versa.

In a preferred embodiment of the production line the robot arm can be moved with a multitude of degrees of freedom.

With the robot arm of this embodiment a large variety of detection paths can be realized. Therewith, the production line can be adapted to packages of various shapes and/or sizes. This may lower costs because the same production line, or at least the same leak detector, can be used for different products.

The specification, in particular in connection with figures, explains the invention further and specifies particularly preferred embodiments of the invention. Particularly preferred variants of the invention and also the technical field will now be explained in more detail on the basis of the enclosed figures. It should be noted that the exemplary embodiments shown in the figures are not intended to restrict the invention. The figures are schematic and may not be in scale. The figures display:
- Fig. 1:: a schematic cross sectional view of a first embodiment of a production line with a single leak detector,
- Fig. 2:: a schematic top view of a second embodiment of a production line with four leak detectors.

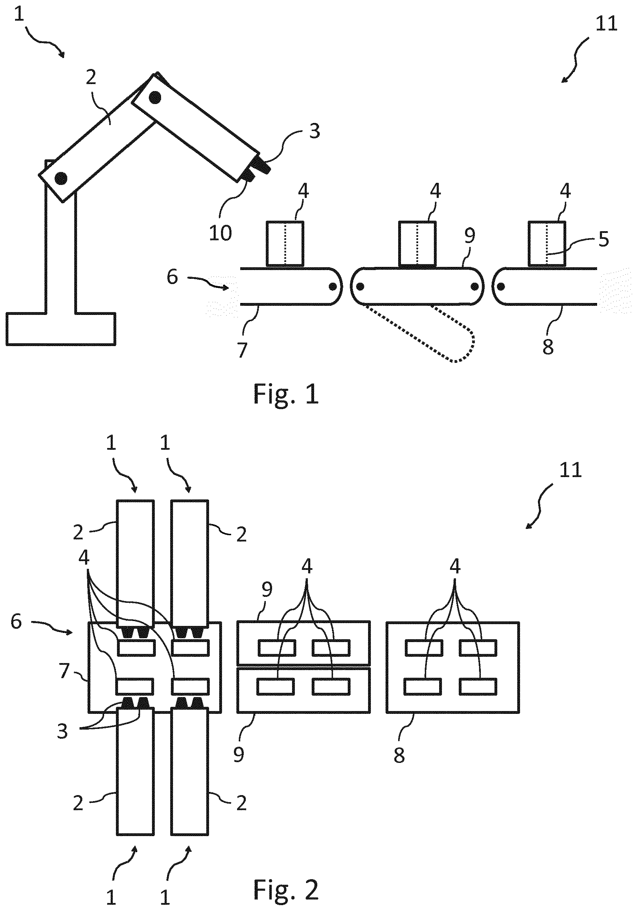

In fig. 1 a production line 11 is shown that comprises a leak detector 1 having a robot arm 2 with a gas detector 3 and a marker 10 at its utmost tip. A conveyer 6 comprising a first section 7, a second section 8 and an ejector 9 in between the first section 7 and the second section 8 is used to convey packages 4 thereon. Each of the packages 4 has a welding seam 5. With the ejector 9, leaky packages 4 can be ejected from the conveyor 6 and from the production line 11.

Fig. 2 shows a further embodiment of a production line 11 comprising a conveyer 6 having a first section 7, a second section 8 and a conveyer 9. In this embodiment the production line 11 further comprises four leak detectors 1. Each of the leak detectors 1 comprises a robot arm 2. Each robot arm 2 has two gas detectors 3. Packages 4 are arranged in two rows on the conveyer 6. Thereby, four packages 4 can be examined by the four leak detectors 1 simultaneously, wherein each package 4 is examined by two gas detectors 3. If a leak is detected in one of the packages 4, the ejector 9, which comprises two parts, can eject the respective package 4.

A method is provided for detecting leaks in packages 4 for food products that are filled with an inert gas and a tracer gas such as helium. The tracer gas can be detected by a gas detector 1 moved along the package by a robot arm. Compared with methods for a stationary gas detector, this method provides an improved efficiency because a dissipating of the tracer gas between test cycles does not have to be awaited.

### List of reference numerals

- 1: leak detector
- 2: robot arm
- 3: gas detector
- 4: package
- 5: welding seam
- 6: conveyor
- 7: first section
- 8: second section
- 9: ejector
- 10: marker
- 11: production line

## Claims

1. Method for detecting leaks in packages (4) processed in a production line (11) comprising at least one leak detector (1) having a robot arm (2) with at least one gas detector (3), wherein the robot arm further comprises a marker installed to be operated for marking a location of a leak on a leaky package; and wherein the marker is preferably arranged at the utmost tip of the robot arm, so that it can be moved flexibly within a large space, the method comprising at least the following steps:
a) moving the gas detector (3) along a detection path covering at least a part of at least one of the packages (4) gathering data, and
b) deciding if a package (4) is deemed to be leaky based on the data gathered by the gas detector (3).

2. Method according to claim 1, wherein the packages (4) are filled at least in part with a tracer gas detectable by the gas detector (3).

3. Method according to one of the preceding claims, wherein step a) further comprises moving the gas detector (3) along at least a part of at least one sealing patch of at least one of the packages (4).

4. Method according to one of the preceding claims, further comprising the following step:
c) ejecting packages (4) deemed to be leaky from the production line (11).

5. Method according to one of the preceding claims, wherein in step b) a signal is emitted when a package (4) is deemed to be leaky.

6. Method according to one of the preceding claims, wherein the packages (4) are conveyed continuously through the production line (11).

7. Method according to one of the claims 1 to 5, wherein the packages (4) are conveyed discontinuously through the production line (11).

8. Method according to one of the preceding claims, wherein a multitude of leak detectors (1) is used to perform steps a) and b) for a multitude of packages (4) simultaneously.

9. Method according to one of the preceding claims, wherein a multitude of gas detectors (3) at the same robot arm (2) is used to perform steps a) and b) for a multitude of packages (4) simultaneously.

10. Method according to one of the preceding claims, wherein in step a) a manual pressure is exerted onto the at least one of the packages (4).

11. Production line (11), installed to be operated according to the method according to one of the preceding claims, comprising at least:
- a conveyor (6) with an ejector (9), and
- at least one leak detector (1) for leak detection in packages (4), wherein the leak detector (1) comprises a robot arm (2) with at least one gas detector (3), and wherein the robot arm (2) is arranged for moving the gas detector (3) along a detection path, wherein the robot arm further comprises a marker for marking a location of a leak on a leaky package, and the marker is installed to be operated according to the above described method for marking the location of a leak on a leaky package. The marker is preferably arranged at the utmost tip of the robot arm, so that it can be moved flexibly within a large space.

12. Production line (11) according to claim 11, wherein the robot arm (2) can be moved with a multitude of degrees of freedom.

## Patentansprüche

1. Verfahren zum Erkennen von Lecks in Verpackungen (4), die in einer Fertigungslinie (11) verarbeitet werden, die mindestens einen Leckdetektor (1) mit einem Roboterarm (2) mit mindestens einem Gasdetektor (3) umfasst, wobei der Roboterarm ferner einen Marker umfasst, der zum Markieren einer Leckstelle auf einer undichten Verpackung installiert ist, und
wobei der Marker vorzugsweise an der äußersten Spitze des Roboterarms angeordnet ist, sodass er in einem großen Raum flexibel bewegt werden kann, wobei das Verfahren mindestens die folgenden Schritte umfasst:
a) Bewegen des Gasdetektors (3) entlang eines Erfassungsweges, der mindestens einen Teil von mindestens einer der Verpackungen (4) abdeckt, um Daten zu sammeln, und
b) Entscheiden, ob eine Verpackung (4) aufgrund der vom Gasdetektor (3) gesammelten Daten als undicht gilt.

2. Verfahren nach Anspruch 1, bei dem die Verpackungen (4) mindestens teilweise mit einem von dem Gasdetektor (3) erfassbaren Tracergas gefüllt sind.

3. Verfahren nach einem der vorhergehenden Ansprüche, wobei Schritt a) ferner das Bewegen des Gasdetektors (3) entlang zumindest eines Teils von mindestens einem Verschlussstück von mindestens einer der Verpackungen (4) umfasst.

4. Verfahren nach einem der vorhergehenden Ansprüche, das ferner den folgenden Schritt umfasst:
c) Auswerfen von Verpackungen (4) aus der Fertigungslinie (11), die als undicht gelten.

5. Verfahren nach einem der vorhergehenden Ansprüche, wobei in Schritt b) ein Signal ausgegeben wird, wenn eine Verpackung (4) als undicht gilt.

6. Verfahren nach einem der vorhergehenden Ansprüche, wobei die Verpackungen (4) kontinuierlich durch die Fertigungslinie (11) befördert werden.

7. Verfahren nach einem der Ansprüche 1 bis 5, wobei die Verpackungen (4) diskontinuierlich durch die Fertigungslinie (11) befördert werden.

8. Verfahren nach einem der vorhergehenden Ansprüche, wobei mehrere Leckdetektoren (1) verwendet werden, um die Schritte a) und b) für mehrere Verpackungen (4) gleichzeitig durchzuführen.

9. Verfahren nach einem der vorhergehenden Ansprüche, wobei mehrere Gasdetektoren (3) an dem gleichen Roboterarm (2) verwendet werden, um die Schritte a) und b) für mehrere Verpackungen (4) gleichzeitig durchzuführen.

10. Verfahren nach einem der vorhergehenden Ansprüche, wobei in Schritt a) ein manueller Druck auf die zumindest eine der Verpackungen (4) ausgeübt wird.

11. Fertigungslinie (11), die zum Betrieb gemäß dem Verfahren nach einem der vorhergehenden Ansprüche eingerichtet ist und mindestens Folgendes umfasst:
- eine Förderbahn (6) mit einem Auswerfer (9) und
- mindestens einen Leckdetektor (1) zur Lecksuche in Verpackungen (4), wobei der Leckdetektor (1) einen Roboterarm (2) mit mindestens einem Gasdetektor (3) umfasst und wobei der Roboterarm (2) zum Bewegen des Gasdetektors (3) entlang eines Erfassungsweges angeordnet ist, wobei der Roboterarm ferner einen Marker zum Markieren einer Leckstelle an einer undichten Packung umfasst, und der Marker so installiert ist, dass er gemäß dem oben beschriebenen Verfahren zum Markieren der Leckstelle an einer undichten Verpackung betrieben wird. Der Marker ist vorzugsweise an der äußersten Spitze des Roboterarms angeordnet, sodass er in einem großen Raum flexibel bewegt werden kann.

12. Fertigungslinie (11) nach Anspruch 11, wobei der Roboterarm (2) mit mehreren Freiheitsgraden bewegt werden kann.

## Revendications

1. Procédé de détection de fuites dans des emballages (4) traités dans une chaîne de production (11), comprenant au moins un détecteur de fuite (1) comportant un bras de robot (2) avec au moins un détecteur de gaz (3), dans lequel le bras de robot comprend en outre un marqueur installé pour être utilisé afin de marquer l'emplacement d'une fuite sur un emballage présentant une fuite ; et
dans lequel le marqueur est de préférence disposé au sommet du bras de robot, afin d'être déplacé de manière amovible dans un grand espace, le procédé comprenant au moins les étapes suivantes :
a) déplacement du détecteur de gaz, lequel collecte des données, (3) le long d'un trajet de détection couvrant au moins une partie d'au moins un des emballages (4), et
b) détermination de l'éventualité de considérer un emballage (4) comme présentant une fuite sur la base des données collectées par le détecteur de gaz (3).

2. Procédé selon la revendication 1, dans lequel les emballages (4) sont remplis au moins en partie d'un gaz traceur détectable par le détecteur de gaz (3).

3. Procédé selon l'une des revendications précédentes, dans lequel l'étape a) comprend en outre le déplacement du détecteur de gaz (3) le long d'au moins une partie d'au moins une pièce d'étanchéité d'au moins l'un des emballages (4).

4. Procédé selon l'une des revendications précédentes, comprenant en outre l'étape suivante :
c) éjection de la chaîne de production (11) des emballages (4) considérés comme présentant des fuites.

5. Procédé selon l'une des revendications précédentes, dans lequel, à l'étape b), un signal est émis lorsqu'un emballage (4) est considéré comme présentant une fuite.

6. Procédé selon l'une des revendications précédentes, dans lequel les emballages (4) sont acheminés en continu à travers la chaîne de production (11).

7. Procédé selon l'une des revendications 1 à 5, dans lequel les emballages (4) sont acheminés de façon discontinue à travers la chaîne de production (11).

8. Procédé selon l'une des revendications précédentes, dans lequel une multitude de détecteurs de fuite (1) est utilisée pour réaliser simultanément les étapes a) et b) pour une multitude d'emballages (4).

9. Procédé selon l'une des revendications précédentes, dans lequel une multitude de détecteurs de gaz (3) sur le même bras de robot (2) est utilisée pour réaliser simultanément les étapes a) et b) pour une multitude d'emballages (4).

10. Procédé selon l'une des revendications précédentes, dans lequel à l'étape a), une pression manuelle est exercée sur l'au moins un des emballages (4).

11. Chaîne de production (11), installée pour fonctionner conformément au procédé selon l'une des revendications précédentes, comprenant au moins :
- un convoyeur (6) muni d'un éjecteur (9), et
- au moins un détecteur de fuite (1) destiné à détecter des fuites dans des emballages (4), dans lequel le détecteur de fuite (1) comprend un bras de robot (2) avec au moins un détecteur de gaz (3), et dans lequel le bras de robot (2) est conçu pour déplacer le détecteur de gaz (3) le long d'un trajet de détection, dans lequel le bras de robot comprend en outre un marqueur destiné à marquer l'emplacement d'une fuite sur un emballage présentant une fuite, et le marqueur étant installé pour être utilisé afin de marquer l'emplacement d'une fuite sur un emballage présentant une fuite, conformément au procédé décrit ci-dessus. Le marqueur est de préférence disposé au sommet du bras de robot, afin d'être déplacé de manière amovible dans un grand espace.

12. Chaîne de production (11) selon la revendication 11, dans laquelle le bras de robot (2) peut être déplacé avec une multitude de degrés de liberté.
